# EUROPÄISCHE PATENTSCHRIFT

(11) **EP 2 080 147 B1**
(45) Veröffentlichungstag und Bekanntmachung des Hinweises auf die Patenterteilung: **08.04.2020**
(21) Anmeldenummer: 07819004.8
(22) Anmeldetag: 15.10.2007
(51) Int. Cl.: G06F 21/34, G06Q 20/12, G06Q 20/32, G06Q 20/38, G06Q 20/42, H04L 9/32

(54) **VERFAHREN ZUM AUSFÜHREN EINER APPLIKATION MIT HILFE EINES TRAGBAREN DATENTRÄGERS**
METHOD FOR EXECUTING AN APPLICATION WITH THE AID OF A PORTABLE DATA STORAGE MEDIUM
PROCÉDÉ POUR L'EXÉCUTION D'UNE APPLICATION À L'AIDE D'UN SUPPORT DE DONNÉES PORTABLE

(30) Priorität: 16.10.2006 DE 102006048797
(43) Veröffentlichungstag der Anmeldung: 22.07.2009
(60) Teilanmeldung: 11006499.5
(73) Patentinhaber: Giesecke+Devrient Mobile Security GmbH, 81677 München (DE)
(72) Erfinder: SPITZ, Stephan, 81247 München (DE); HINZ, Walter, 85748 Garching (DE)
(86) Internationale Anmeldenummer: PCT/EP2007/008933
(87) Internationale Veröffentlichungsnummer: WO 2008/046575

(56) Entgegenhaltungen:
- DE-A1- 19 718 103
- US-A1- 2003 078 887
- US-A1- 2005 221 853
- US-A1- 2006 075 227

## Beschreibung

Die Erfindung betrifft ein Verfahren zum Ausführen einer Applikation mit Hilfe eines tragbaren Datenträgers.

Mit Hilfe eines tragbaren Datenträgers kann bei der Ausführung einer Applikation eine hohe Sicherheit vor Manipulationen gewährleistet werden, wenn der tragbare Datenträger manipulationssicher ausgebildet ist. Dies ist beispielsweise bei Applikationen von größter Bedeutung, bei denen Transaktionen des bargeldlosen Zahlungsverkehrs durchgeführt werden. Der Manipulationsschutz ist allerdings nur dann gewährleistet, wenn die Applikation innerhalb des tragbaren Datenträgers ausgeführt wird.

Für die Ausführung einer Applikation wird jedoch in vielen Fällen zusätzlich zum tragbaren Datenträger ein externes Gerät benötigt. Falls es sich um ein manipulationsgeschütztes Gerät handelt, wie beispielsweise einen Chipkartenleser einer hohen Sicherheitsklasse, führt dies in der Regel nicht zu Sicherheitsproblemen. Es werden aber häufig Geräte eingesetzt, die nicht oder nur unzureichend gegen Manipulationen geschützt sind, wie beispielsweise ein Personalcomputer. Um eine Transaktion mit einem entfernt angeordneten Server durchführen zu können ist zudem eine Online-Verbindung erforderlich, beispielsweise über das Internet. Dadurch besteht das Risiko von Manipulationen durch Viren oder Trojaner. Beispielsweise können durch diese Manipulationen die am Bildschirm des Personalcomputers angezeigten Daten verfälscht werden. Bei einer Homebanking-Anwendung kann das dazu führen, dass die angezeigten Transaktionsdaten von den tatsächlichen Transaktionsdaten abweichen und der Benutzer somit tatsächlich eine andere Transaktion freigibt als er gemäß den angezeigten Daten beabsichtigt.

Eine Möglichkeit derartige Angriffe abzuwehren besteht darin, in den tragbaren Datenträger eine Anzeigeeinheit und eine Bestätigungsvorrichtung zu integrieren. So ist aus der WO 2004/032414 A1 ein Verfahren zum digitalen Signieren von Daten durch einen Benutzer bekannt. Dabei werden die zu signierenden Daten an eine Chipkarte übertragen, die als ein Signiergerät verwendet wird. Die Daten werden dem Benutzer von der Chipkarte angezeigt. Durch Bedienen einer Bestätigungsvorrichtung durch den Benutzer werden die Daten mit Hilfe eines Prozessors digital signiert.

Aus der DE 10 2004 046 847 A1 ist ein Verfahren zur Erzeugung einer digitalen Signatur für zu signierende Daten durch einen Benutzer mittels eines tragbaren Datenträgers bekannt. Bei diesem Verfahren werden Identifikationsdaten für die zu signierenden Daten in einem Server bestimmt und mit Vergleichsdaten verglichen. Im Server wird eine Auswahl aus den zu signierenden Daten bestimmt und dem Benutzer angezeigt. Wenn nach dem Schritt des Darstellens eine Freigabe der Signaturerzeugung durch den Benutzer erfolgt, wird die Signatur in dem tragbaren Datenträger erzeugt. Die Anzeige erfolgt beispielsweise auf einer Anzeigeeinheit des tragbaren Datenträgers oder eines manipulationsgeschützten Endgeräts. Ebenso ist es auch möglich, für die Anzeige ein mobiles Endgerät zu verwenden, an das die Anzeigedaten und/oder Identifikationsdaten vom Server übertragen werden.

Allerdings ist ein tragbarer Datenträger, wie z. B. eine Chipkarte, mit einer Anzeigevorrichtung relativ aufwendig. Manipulationsgeschützte Endgeräte sind ebenfalls relativ aufwendig und teuer und für Applikationen, für die eine kostengünstige Infrastruktur erforderlich ist, wenig geeignet.

Die WO 2006/ 029758A1 offenbart ein Verfahren zur Freischaltung eines Zugangs in einem oder über ein Computernetzwerk, an das ein Endgerät wenigstens zeitweise angeschlossen ist. Bei dem Endgerät kann es sich beispielsweise um einen Personalcomputer, um ein Telefon oder um einen Personal Digital Assistant handeln. Bei dem bekannten Verfahren wird eine Datenverbindung zwischen dem Endgerät und einem tragbaren Gerät zur Bereitstellung von Zugangsdaten, beispielsweise einer Chipkarte oder ein Token, hergestellt. Das tragbare Gerät wird in einen Kommunikationspfad zwischen dem Endgerät und dem Computernetzwerk eingebunden. Mit Hilfe der Zugangsdaten wird die Freischaltung des Zugangs veranlasst.

US 2006/075227 A1 und US 2005/0221853 A1 zeigen, dass der Zugriff auf gespeicherte Informationen oder Funktionen eines tragbaren Moduls, wie beispielsweise eine Authentisierung des Moduls gegenüber einem externen Gerät, durch ein Benutzerpasswort geschützt werden kann.

US 2003/0078887 A1 beschreibt die Durchführung einer Zahlungsverkehrstransaktion unter Beteiligung eines Abrechnungsterminals mithilfe einer IC-Karte. Mittels des Abrechnungsterminals werden Zahlungs- und Abrechnungsdaten auf die IC-Karte geschrieben, wobei die zu schreibenden Daten vor Ausführung des Schreibvorgangs auf einem Display des Abrechnungsterminals angezeigt werden und durch einen Nutzer freigegeben werden müssen. Die IC-Karte wird anschließend an einem Zahlungscomputer präsentiert und entsprechend den auf der IC-Karte gespeicherten Zahlungs-und Abrechnungsdaten wird eine Online-Transaktion mit einer Finanzinstitution ausgeführt. Nach Abschluss der Online-Transaktion werden die auf der IC-Karte gespeicherten Zahlungs-und Abrechnungsdaten gelöscht.

Der Erfindung liegt die Aufgabe zugrunde, bei der Ausführung einer Applikation mit Hilfe eines tragbaren Datenträgers, an der ein externes Gerät beteiligt ist, mit vertretbarem Aufwand einen möglichst guten Schutz vor Manipulationen zu erzielen.

Diese Aufgabe wird durch ein Verfahren mit der Merkmalskombination des Anspruchs 1 gelöst.

Es ist ein Grundgedanke der Erfindung die Sicherheit zu erhöhen, indem der tragbare Datenträger zwei unterschiedliche Datenkanäle verwendet, um eine Applikation mit Hilfe des ersten Datenkanals zumindest teilweise auszuführen und Kenndaten für die ausgeführte Applikation über einen zweiten Datenkanal bereit zu stellen. Die Kenndaten sind zur Darstellung für einen Benutzer vorgesehen. Ein zweiter Teil der Applikation wird erst ausgeführt nach einer Freischaltung durch den Benutzer.

Die Erfindung hat den Vorteil, dass bei der Ausführung der Applikation ein guter Schutz gegen Manipulationen erzielbar ist, da für die Ausführung des zweiten Teils der Applikation eine Freischaltung durch den Benutzer erforderlich ist. Anhand der Kenndaten kann der Benutzer feststellen, ob eine Manipulation vorliegt und ggf. die Freischaltung verweigern.

Der zweite Teil der Applikation wird vorzugsweise mit den vom ersten Teil der Applikation bereitgestellten Kenndaten durchgeführt. Dadurch wird dem Benutzer eine wirksame Kontrolle ermöglicht.

Der tragbare Datenträger kann zwei unterschiedliche Schnittstellen als die zwei Datenkanäle verwenden. Für einen erfolgreichen Angriff auf die Ausführung der Applikation müsste der Angreifer beide Schnittstellen manipulieren.

Der tragbare Datenträger kann über den zweiten Datenkanal eine zweite Funktionalität externer Geräte ansprechen, die vorzugsweise nicht Teil der ausgeführten Applikation ist. Für einen erfolgreichen Angriff auf die Ausführung der Applikation müsste der Angreifer parallel die zweite Funktionalität manipulieren. Die zweite Funktionalität ist vorzugsweise eine Standardfunktion des externen Gerätes, wie beispielsweise proaktive Kommandos des SIM-Toolkits. Besonders vorteilhaft ist es, wenn die zweite Funktionalität, wie im Falle von proaktiven Kommandos (DISPLAY TEXT und GET INKEY), von dem tragbaren Datenträger gesteuert werden kann.

Die zweite Schnittstelle kann den tragbaren Datenträger insbesondere auch mit einem zweiten externen Gerät verbinden. Für einen erfolgreichen Angriff auf die Ausführung der Applikation müsste der Angreifer beide externen Geräte manipulieren.

In einer solchen Variante des Verfahrens zur Durchführung einer Applikation mit Hilfe eines tragbaren Datenträgers wird über eine erste Schnittstelle des tragbaren Datenträgers eine Datenverbindung mit einem ersten externen Gerät ausgebildet. Unter Einbeziehung des ersten externen Geräts wird ein erster Teil der Applikation ausgeführt. Über eine zweite Schnittstelle des tragbaren Datenträgers wird eine Datenverbindung mit einem zweiten externen Gerät ausgebildet. Vom tragbaren Datenträger werden über die zweite Schnittstelle Kenndaten, die bei der Ausführung des ersten Teils der Applikation bereitgestellt wurden, an das zweite externe Gerät übermittelt. Ein zweiter Teil der Applikation wird erst nach einer Freischaltung durch einen Benutzer ausgeführt.

Besonders vorteilhaft ist es, wenn die Kenndaten wenigstens teilweise auf einer Anzeigevorrichtung des zweiten externen Geräts angezeigt werden. Auf diese Weise können die Kenndaten dem Benutzer zugänglich gemacht werden.

Die Freischaltung kann durch Betätigung einer Eingabevorrichtung des ersten externen Geräts oder einer Eingabevorrichtung des zweiten externen Geräts veranlasst werden. Um ein besonders hohes Sicherheitsniveau zu erreichen können in das erste externe Gerät oder in das zweite externe Gerät Freischaltdaten eingegeben werden. Insbesondere können als Freischaltdaten Daten eingegeben werden, die auf der Anzeigevorrichtung des zweiten externen Geräts angezeigt werden.

Im Rahmen des erfindungsgemäßen Verfahrens kann vom ersten externen Gerät über die erste Schnittstelle des tragbaren Datenträgers oder vom zweiten externen Gerät über die zweite Schnittstelle des tragbaren Datenträgers eine Freischaltinformation an den tragbaren Datenträger übermittelt werden. Dabei ist es besonders vorteilhaft, wenn die Freischaltinformation die Freischaltdaten wenigstens teilweise enthält. Die Freischaltdaten können dann für eine Weiterverarbeitung im tragbaren Datenträger genutzt werden. Insbesondere kann die Freischaltinformation so auf die Kenndaten abgestimmt sein, dass die Freischaltung des zweiten Teils der Applikation nur dann wirksam wird, wenn der zweite Teil der Applikation auf Basis der Kenndaten ausgeführt wird. Dies hat den Vorteil, dass eine Manipulation der Freischaltung verhindert werden kann, da die Freischaltinformation ausschließlich die gewünschte und keine andere Ausführung der Applikation ermöglicht. Die Freischaltinformation kann beispielsweise durch eine kryptographische Beziehung mit den Kenndaten verknüpft sein.

Bei der Applikation kann es sich beispielsweise um eine Applikation zur Durchführung einer Transaktion des bargeldlosen Zahlungsverkehrs handeln. Dabei können die Kenndaten die Transaktion charakterisierende Daten darstellen, beispielsweise einen zu transferierenden Geldbetrag, eine Bankverbindung usw. Im Rahmen des ersten Teils der Applikation können die die Transaktion charakterisierenden Daten vom ersten externen Gerät an den tragbaren Datenträger übermittelt werden. Im Rahmen des zweiten Teils der Applikation können die die Transaktion charakterisierenden Daten vom tragbaren Datenträger über ein Netzwerk, insbesondere das Internet, an einen Server übermittelt werden.

Die Datenverbindung über die erste Schnittstelle des tragbaren Datenträgers kann beispielsweise durch eine berührende Kontaktierung ausgebildet werden. Die Datenverbindung über die zweite Schnittstelle des tragbaren Datenträgers wird vorzugsweise kontaktlos ausgebildet. Dies hat den Vorteil, dass die Datenverbindung über die zweite Schnittstelle ohne eine zusätzliche Infrastruktur hergestellt werden kann und die Handhabung durch diese zusätzliche Datenverbindung nicht erschwert wird.

Als erstes externes Gerät kann ein Computer, insbesondere ein Personalcomputer, eingesetzt werden. Personalcomputer sind sehr weit verbreitet, so dass sich das erfindungsgemäße Verfahren für einen Masseneinsatz eignet. Als zweites externes Gerät kann ein Mobilfunktelefon oder ein Chipkartenleser eingesetzt wird. Der Einsatz eines Mobilfunktelefons hat den Vorteil, dass ein hoher Prozentsatz der potentiellen Nutzer des erfindungsgemäßen Verfahrens ohnehin ein Mobilfunktelefon besitzt. Ein weiterer Vorteil besteht darin, dass ein Mobilfunktelefon in der Regel von seinem Inhaber sorgfältig aufbewahrt wird und durch eine Geheimzahl geschützt ist. Das führt dazu, dass ein Mobilfunktelefon von seinem Inhaber in der Regel als vertrauenswürdiges Gerät angesehen wird.

Als tragbarer Datenträger wird vorzugsweise eine Chipkarte oder ein Token eingesetzt. Diese sind kostengünstig verfügbar, können von einem Benutzer leicht mitgeführt werden und erfüllen einen hohen Sicherheitsstandard.

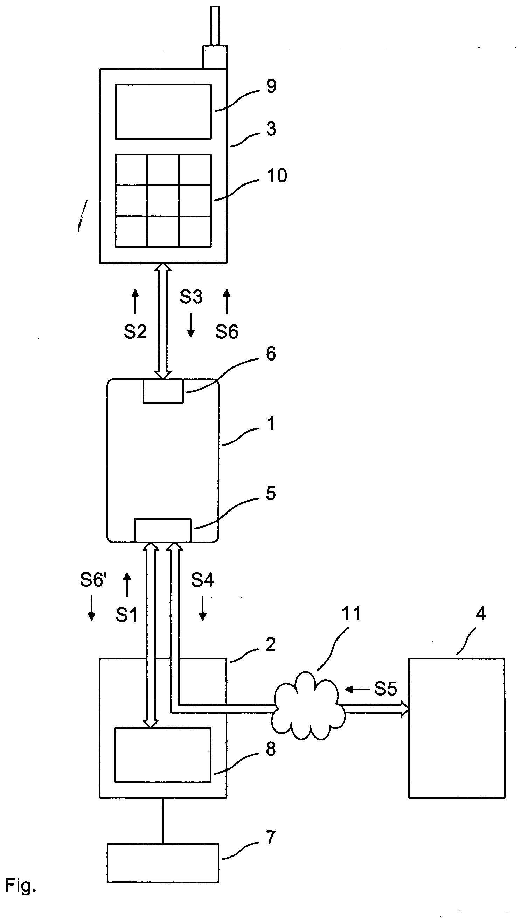

Die Erfindung wird nachstehend anhand des in der Zeichnung dargestellten Ausführungsbeispiels erläutert.

Die einzige Figur zeigt eine schematische Blockdarstellung für eine Anordnung mit der das erfindungsgemäße Verfahren durchgeführt werden kann. Dargestellt sind eine Chipkarte 1 als ein Ausführungsbeispiel eines tragbaren Datenträgers, ein Personalcomputer 2, ein Mobilfunktelefon 3 und ein Server 4. Der Aufbau dieser Einrichtungen ist jeweils nicht im Einzelnen wiedergegeben, sondern es sind lediglich Funktionskomponenten dargestellt, die für die Beschreibung des erfindungsgemäßen Verfahrens herangezogen werden. Anstelle der Chipkarte 1 kann beispielsweise auch ein Token oder ähnliches vorgesehen sein. Das Mobilfunktelefon 3 kann beispielsweise durch einen Chipkartenleser ersetzt werden.

Als Funktionskomponenten der Chipkarte 1 sind eine erste Schnittstelle 5 und eine zweite Schnittstelle 6 dargestellt. Die Schnittstellen 5 und 6 sind Bestandteile eines nicht figürlich dargestellten integrierten Schaltkreises, der noch weitere nicht figürlich dargestellte Funktionskomponenten aufweist. Die erste Schnittstelle 5 kann beispielsweise als eine kontaktbehaftete Schnittstelle ausgebildet sein, bei der durch eine berührende Kontaktierung eines figürlich nicht dargestellten Kontaktfelds der Chipkarte 1 eine Kommunikation mit der Chipkarte 1 erfolgen kann. Bei der zweiten Schnittstelle 6 der Chipkarte 1 kann es sich um eine kontaktlose Schnittstelle handeln, die eine Kommunikation mit der Chipkarte 1 ohne eine galvanische Verbindung zum Kommunikationspartner ermöglicht, beispielsweise um eine NFC-Schnittstelle. NFC steht dabei für Near Field Communication und bezeichnet eine kurzreichweitige Datenübertragung mittels magnetischer Wechselfelder.

Beim Personalcomputer 2 sind lediglich eine Tastatur 7 und ein Browser 8 dargestellt. Als Funktionskomponenten des Mobilfunktelefons 3 sind eine Anzeige 9 und ein Tastenblock 10 dargestellt.

Durch Doppelpfeile sind in der Fig. Datenverbindungen zwischen den Funktionskomponenten dargestellt, die für das erfindungsgemäße Verfahren von Interesse sind. Wie aus der Fig. hervorgeht kann über die erste Schnittstelle 5 der Chipkarte 1 eine Datenverbindung zwischen der Chipkarte 1 und dem Browser 8 des Personalcomputers 2 hergestellt werden. Weiterhin kann über die erste Schnittstelle 5 der Chipkarte 1 eine Datenverbindung zwischen der Chipkarte 1 und dem Server 4 hergestellt werden. Diese Datenverbindung verläuft über den Personalcomputer 2 und über ein Netzwerk 11, an das der Personalcomputer 2 angeschlossen ist, beispielsweise über das Internet. Die Kommunikation zwischen der Chipkarte 1 und dem Browser 8 und die Kommunikation zwischen der Chipkarte 1 und dem Server 4 können jeweils über das HTTPS-Protokoll erfolgen.

Über die zweite Schnittstelle 6 der Chipkarte 1 kann eine Datenverbindung zwischen der Chipkarte 1 und dem Mobilfunktelefon 3 ausgebildet werden.

Mit der in der Fig. dargestellten Anordnung können beispielsweise Homebanking-Anwendungen durchgeführt werden oder sonstige Transaktionen des bargeldlosen Zahlungsverkehrs abgewickelt werden. Im Folgenden wird der Ablauf des erfindungsgemäßen Verfahrens am Beispiel einer Homebanking-Anwendung näher erläutert:
Vom Browser 8 wird in einem Übertragungsschritt S1 eine Transaktionsanfrage über die erste Schnittstelle 5 der Chipkarte 1 an die Chipkarte 1 zur Weiterleitung an den Server 4 übermittelt. Die Transaktionsanfrage wird somit vom Browser 8 nicht direkt an den Server 4 übermittelt, sondern über die Chipkarte 1, die als ein Authentisierungsgateway dient und beispielsweise ähnlich wie ein Proxy-Server betrieben werden kann. Die Transaktionsanfrage wird beispielsweise aus Daten generiert, die der Benutzer mit Hilfe der Tastatur 7 des Personalcomputers 2 eingibt und kann unter anderen Angaben zu einem zu transferierenden Geldbetrag, zu einer Bankverbindung usw. enthalten.

Die Chipkarte 1 leitet die Transaktionsanfrage nicht unmittelbar an den Server 4 weiter, sondern fordert zunächst in einem Übertragungsschritt S2 über ihre zweite Schnittstelle 6 eine Freigabe der Transaktion vom Mobilfunktelefon 3 an. Hierzu kann die Chipkarte 1 beispielsweise die Transaktionsdaten vollständig oder auszugsweise an das Mobilfunktelefon 3 übertragen. Das Mobilfunktelefon 3 stellt die übertragenen Transaktionsdaten auf seiner Anzeige 9 dar, so dass der Benutzer sie ablesen kann und fordert den Benutzer auf, die Transaktion freizugeben, falls die angezeigten Transaktionsdaten mit den vom Benutzer gewünschten Transaktionsdaten übereinstimmen. Die Freigabe kann beispielsweise durch eine Eingabe auf dem Tastenblock 10 des Mobilfunktelefons 3 erfolgen.

Demgemäß wird eine Freigabeinformation in einem Übertragungsschritt S3 vom Mobilfunktelefon 3 über die zweite Schnittstelle 6 der Chipkarte 1 an die Chipkarte 1 übertragen. Abhängig von den Sicherheitsanforderungen kann vorgesehen sein, die Transaktionsanfrage nach Erhalt der korrekten Freigabeinformation zu signieren und/oder zu authentisieren. Danach wird die Transaktionsanfrage in einem Übertragungsschritt S4 von der Chipkarte 1 über die erste Schnittstelle 5 der Chipkarte 1, den Personalcomputer 2 und das Netzwerk 11 an den Server 4 weitergeleitet. Der Server 4 führt die Transaktion aus und übermittelt in einem Übertragungsschritt S5 eine Ausführungsinformation über das Netzwerk 11, den Personalcomputer 2 und die erste Schnittstelle 5 der Chipkarte 1 an die Chipkarte 1. Die Chipkarte 1 leitet die Ausführungsinformation des Servers 4 in einem Übertragungsschritt S6 über ihre zweite Schnittstelle 6 an das Mobilfunktelefon 3 zur Darstellung auf der Anzeige 9 weiter. Alternativ dazu kann die Chipkarte 1 die Ausführungsinformation des Servers 4 in einem Schritt S6' über ihre erste Schnittstelle 5 an den Browser 8 weiterleiten.

Der vorstehend beschriebenen Vorgehensweise liegt die Annahme zugrunde, dass das Mobilfunktelefon 3 für den Benutzer ein vertrauenswürdiges Gerät darstellt und der Benutzer deshalb davon ausgehen kann, dass die angezeigten Transaktionsdaten mit den in der Chipkarte 1 vorliegenden tatsächlichen Transaktionsdaten der Transaktionsanfrage identisch sind.

In einer Weiterbildung des erfindungsgemäßen Verfahrens wird nach dem Übertragungsschritt S2 auf der Anzeige 9 des Mobilfunktelefons 3 eine Transaktionsnummer für die Transaktionsanfrage angezeigt. Die Transaktionsnummer legitimiert die Transaktion und ist zum Schutz vor Manipulationen durch eine von der Chipkarte 1 erzeugte digitale Signatur eindeutig mit der Transaktionsanfrage verbunden. Zur Freigabe der Transaktion gibt der Benutzer die Transaktionsnummer auf dem Tastenblock 10 des Mobilfunktelefons 3 oder auf der Tastatur 7 des Personalcomputers 2 ein. Im letztgenannten Fall wird die Transaktionsnummer beispielsweise vom Browser 8 über die erste Schnittstelle 5 der Chipkarte 1 an die Chipkarte 1 übermittelt.

Für die Eingabe der Transaktionsnummer ist kein vertrauenswürdiges Eingabegerät erforderlich, da mit der Transaktionsnummer lediglich die in der Chipkarte 1 augenblicklich vorhandene Transaktionsanfrage legitimiert werden kann. Für eine demgegenüber beispielsweise infolge einer Manipulation abgewandelte Transaktionsanfrage ist die Transaktionsnummer nicht gültig.

In Abwandlung der beschriebenen Vorgehensweise ist es auch möglich auf das Mobilfunktelefon 3 zu verzichten und eine Chipkarte 1 mit einem Display zu verwenden. In diesem Fall werden die Transaktionsdaten auf dem Display der Chipkarte 1 angezeigt. Der Benutzer prüft die Transaktionsdaten und nimmt eine Freischaltung der Transaktion vor, falls die Transaktionsdaten richtig sind.

Als weitere Ausführungsformen sind Verfahren zu sehen, in denen kein zweites Endgerät eingesetzt wird, sondern nur ein zweiter Datenkanal zum ersten externen Endgerät. Im Folgenden werden als Beispiel für solche Ausführungsformen Verfahren in einem System beschrieben, das einen Transaktionsserver, ein Mobilfunktelefon und dessen Sicherheitsmodul (SIM-Karte) aufweist.

Ein Benutzer ruft auf seinem Mobilfunkgerät eine Applikation auf, die mit Hilfe des Sicherheitsmoduls und einem Transaktionsserver eine Transaktion über das Internet ermöglicht. Vorzugsweise stellt das Sicherheitsmodul hierzu als http-Proxy eine sichere Internetverbindung zu dem Transaktionsserver bereit. Der im vorliegenden Sinne erste Datenkanal zwischen Sicherheitsmodul und dem Mobilfunkgerät könnte über die ISO-Kontakte (C2, C3 und C7) des Sicherheitsmoduls erfolgen. Vorzugsweise werden jedoch die USB-Kontakte (C4, C8) des Sicherheitsmoduls als Schnittstelle für den ersten Datenkanal verwendet. Auf dem ersten Datenkanal werden über eine TCP/ IP-Schicht in HTML formatierte Daten mit der Applikation ausgetauscht. Als dritter Datenkanal kann die Verbindung des tragbaren Datenträgers mit dem Transaktionsserver über das Internet gesehen werden.

Optional erhält das Sicherheitsmodul von dem Transaktionsserver über einen vierten Datenkanal, vorzugsweise in der Form einer SMS über das Mobilfunknetz (Push SMS gemäß Spezifikation ETSI TS 31.115/116), eine Bestätigung der Transaktionsdaten. Die Transaktionsdaten, die über den ersten Datenkanal festgelegt wurden, werden dem Benutzer zur Freigabe der Transaktion mit Hilfe eines zweiten Datenkanals zwischen Mobilfunkgerät und dem Sicherheitsmodul dargestellt. Mit Hilfe des proaktiven Kommandos DISPLAY TEXT (gemäß der Spezifikation GSM 11.14) erfolgt die Darstellung der Transaktionsdaten auf der Anzeige des Mobilfunkgerätes. Der zweite Datenkanal kann über eine andere Schnittstelle, ein anderes Protokoll und/ oder andere Funktionen im Mobilfunkgerät geführt werden. Er verwendet beispielsweise andere Kontakte (C2, C3 und C7) als der erste Datenkanal (C4,C8). Der zweite Datenkanal kann zudem ein abweichendes Übertragungsprotokoll (T=0 oder T=1 ⇔ USB) einsetzen. Über den zweiten Datenkanal werden die Daten nicht mehr an die abzusichernde Applikation, sondern an eine andere Funktion, die vorzugsweise eine Standardfunktion des Mobilfunkgerätes ist, übertragen.

Optional kann mit Hilfe des weiteren proaktiven Kommandos GET INKEY eine Freigabe der Transaktion über den zweiten Datenkanal angefordert werden. Alternativ kann ein Freigabesignal für die Transaktion jedoch auch von dem Mobilfunkgerät über den ersten Datenkanal zum Sicherheitsmodul übertragen werden.

Die von dem Transaktionsserver über den vierten Datenkanal erhaltenen Transaktionsdaten können beispielsweise eine TAN (Transaktionsnummer) als Freigabeinformation enthalten, die dem Benutzer mit Hilfe des zweiten Datenkanals angezeigt wird. Der Benutzer kann die dargestellte TAN in eine über den ersten Datenkanal bereit gestellte HTML-Seite eingeben, um die Transaktion freizugeben. Vorzugsweise wird dem Benutzer eine Freigabeinformation, wie eine TAN, jedoch nicht als Text, sondern als Bild dargestellt (Proaktives Kommando: DISPLAY IMAGE), um eine automatische Extraktion der Freigabeinformation zu erschweren.

Die Freigabe der Transaktion bzw. das Ergebnis der weiteren Ausführung der Applikation kann ebenfalls entweder über den dritten oder den vierten Datenkanal an den Transaktionsserver übermittelt werden, also beispielsweise als HTML-Daten oder als SMS.

## Patentansprüche

1. Verfahren zur Durchführung einer Applikation, an der ein externes Gerät (2) beteiligt ist, mit Hilfe eines tragbaren Datenträgers (1), wobei
über einen ersten Datenkanal (5) des tragbaren Datenträgers (1) eine Datenverbindung mit einem ersten externen Gerät (2) ausgebildet wird; mit Hilfe des ersten Datenkanals unter Einbeziehung des ersten externen Geräts (2) ein erster Teil der Applikation ausgeführt wird;
im Rahmen des ersten Teils der Applikation Kenndaten vom ersten externen Gerät (2) an den tragbaren Datenträger (1) übermittelt werden,
ein zweiter Teil der Applikation unter Einbeziehung des ersten externen Geräts (2) erst nach einer Freischaltung durch einen Benutzer ausgeführt wird, **dadurch gekennzeichnet, dass**
über einen zweiten, vom ersten Datenkanal (5) unterschiedlichen Datenkanal (6) des tragbaren Datenträgers (1) eine zweite Datenverbindung mit dem ersten externen Gerät (2) oder mit einem zweiten externen Gerät (3) ausgebildet wird;
vom tragbaren Datenträger (1) über den zweiten Datenkanal (6) Kenndaten, die bei der Ausführung des ersten Teils der Applikation bereitgestellt wurden und anhand welcher der Benutzer feststellen kann, ob eine Manipulation vorliegt, und gegebenenfalls die Freischaltung verweigern kann, an das erste externe Gerät (2) bzw. an das zweite externe Gerät (3) übermittelt und wenigstens teilweise auf einer Anzeigevorrichtung des ersten externen Gerätes (2) oder des zweiten externen Geräts (3) angezeigt werden.

2. Verfahren nach Anspruch 1 wobei der erste Datenkanal durch eine erste Schnittstelle des tragbaren Datenträgers bereitgestellt wird und der zweite Datenkanal durch eine zweite Schnittstelle des tragbaren Datenträgers bereitgestellt wird.

3. Verfahren nach einem der Ansprüche 1 bis 2, wobei die Kenndaten über den zweiten Datenkanal an eine zweite Funktionalität des ersten externen Gerätes übertragen werden, die kein Teil der ausgeführten Applikation ist.

4. Verfahren nach Anspruch 1 oder 2 wobei die zweite Datenverbindung mit dem zweiten externen Gerät (3) ausgebildet wird.

5. Verfahren nach einem der Ansprüche 1 bis 4, **dadurch gekennzeichnet, dass** der zweite Teil der Applikation mit den vom ersten Teil der Applikation bereitgestellten Kenndaten durchgeführt wird.

6. Verfahren nach einem der vorhergehenden Ansprüche, **dadurch gekennzeichnet, dass** die Freischaltung durch Betätigung einer Eingabevorrichtung (7) des ersten externen Geräts (2) oder einer Eingabevorrichtung (10) des zweiten externen Geräts (3) veranlasst wird.

7. Verfahren nach einem der vorhergehenden Ansprüche, **dadurch gekennzeichnet, dass** vom ersten externen Gerät (2) über die erste Schnittstelle (5) des tragbaren Datenträgers (1) oder vom zweiten externen Gerät (3) über die zweite Schnittstelle (6) des tragbaren Datenträgers (1) eine Freischaltinformation an den tragbaren Datenträger (1) übermittelt wird..

8. Verfahren nach einem Anspruch 7, **dadurch gekennzeichnet, dass** die Freischaltinformation so auf die Kenndaten abgestimmt ist, dass die Freischaltung des zweiten Teils der Applikation nur dann wirksam wird, wenn der zweite Teil der Applikation auf Basis der Kenndaten ausgeführt wird.

9. Verfahren nach einem der Ansprüche 7 oder 8, **dadurch gekennzeichnet, dass** die Freischaltinformation durch eine kryptographische Beziehung mit den Kenndaten verknüpft ist.

10. Verfahren nach einem der vorhergehenden Ansprüche, **dadurch gekennzeichnet, dass** die Kenndaten eine Transaktion charakterisierende Daten darstellen.

11. Verfahren nach Anspruch 10, **dadurch gekennzeichnet, dass** im Rahmen des ersten Teils der Applikation die die Transaktion charakterisierenden Daten vom ersten externen Gerät (2) an den tragbaren Datenträger (1) übermittelt werden.

12. Verfahren nach einem der Ansprüche 10 oder 11, **dadurch gekennzeichnet, dass** im Rahmen des zweiten Teils der Applikation die die Transaktion charakterisierenden Daten vom tragbaren Datenträger (1) über ein Netzwerk (11), insbesondere das Internet, an einen Server (4) übermittelt werden.

13. Tragbarer Datenträger, insbesondere in der Form einer Chipkarte, eines Sicherheitsmoduls, einer sicheren Massenspeicherkarte oder eines Tokens, eingerichtet zur Ausführung eines Verfahrens nach einem der vorhergehenden Ansprüche.

## Claims

1. A method for carrying out an application, in which an external device (2) is involved, with the help of a portable data carrier (1), wherein via a first data channel (5) of the portable data carrier (1) a data connection with a first external device (2) is formed;
with the help of the first data channel
involving the first external device (2) a first part of the application is executed;
within the framework of the first part of the application identification data are transferred from the first external device (2) to the portable data carrier (1),
a second part of the application involving the first external device (2) is not executed until after a release by a user, **characterized in that**
via a second data channel (6) of the portable data carrier (1), different from the first data channel (5), a second data connection with the first external device (2) or with a second external device (3) is formed;
from the portable data carrier (1) via the second data channel (6) identification data, which were provided on the execution of the first part of the application and by which the user can determine whether a manipulation has occurred and optionally deny the release, are transferred to the first external device (2) or to the second external device (3) and are shown at least partially on a display device of the first external device (2) or of the second external device (3).

2. The method according to claim 1 wherein the first data channel is provided by a first interface of the portable data carrier and the second data channel is provided by a second interface of the portable data carrier.

3. The method according to any of the claims 1 to 2, wherein the identification data are transmitted via the second data channel to a second functionality of the first external device which is not a part of the executed application.

4. The method according to claim 1 or 2, wherein the second data connection is formed with the second external device (3).

5. The method according to any of the claims 1 to 4, **characterized in that** the second part of the application is carried out with the identification data provided by the first part of the application.

6. The method according to any of the previous claims, **characterized in that** the release is triggered by actuating an input device (7) of the first external device (2) or an input device (10) of the second external device (3).

7. The method according to any of the previous claims, **characterized in that** from the first external device (2) via the first interface (5) of the portable data carrier (1) or from the second external device (3) via the second interface (6) of the portable data carrier (1) a release information is transferred to the portable data carrier (1).

8. The method according to claim 7, **characterized in that** the release information is adjusted to the identification data such that the release of the second part of the application becomes effective only when the second part of the application is executed on the basis of the identification data.

9. The method according to any of the claims 7 or 8, **characterized in that** the release information is linked with the identification data by a cryptographic relation.

10. The method according to any of the previous claims, **characterized in that** the identification data represent data characterizing a transaction.

11. The method according to claim 10, **characterized in that** within the framework of the first part of the application the data characterizing the transaction are transferred from the first external device (2) to the portable data carrier (1).

12. The method according to any of the claims 10 or 11, **characterized in that** within the framework of the second part of the application the data characterizing the transaction are transferred from the portable data carrier (1) via a network (11), in particular the Internet, to a server (4).

13. A portable data carrier, in particular in the form of a chip card, a security module, a secure mass storage card or a token, adapted to execute a method according to any of the previous claims.

## Revendications

1. Procédé de réalisation d'une application à laquelle participe un appareil (2) externe, à l'aide d'un support de données (1) portable, cependant que
par l'intermédiaire d'un premier canal de données (5) du support de données (1) portable, une connexion de données avec un premier appareil (2) externe est établie ;
à l'aide du premier canal de données, en impliquant le premier appareil (2) externe, une première partie de l'application est exécutée ;
dans le cadre de la première partie de l'application, des données clés sont transférées du premier appareil (2) externe au support de données (1) portable,
une deuxième partie de l'application est exécutée en impliquant le premier appareil (2) externe seulement après un déblocage par un utilisateur,
**caractérisé en ce que**
par l'intermédiaire d'un deuxième canal de données (6), différent du premier canal de données (5), du support de données (1) portable, une deuxième connexion de données avec le premier appareil (2) externe ou avec le deuxième appareil (3) externe est établie ;
du support de données (1) portable, par l'intermédiaire du deuxième canal de données (6), des données clés qui ont été mises à disposition lors de l'exécution de la première partie de l'application et au moyen desquelles l'utilisateur peut constater s'il y a manipulation et peut, le cas échéant, refuser le déblocage, sont transférées au premier appareil (2) externe ou au deuxième appareil (3) externe et sont affichées au moins partiellement sur un dispositif d'affichage du premier appareil (2) externe ou du deuxième appareil (3) externe.

2. Procédé selon la revendication 1, cependant que le premier canal de données est mis à disposition par une première interface du support de données portable, et que le deuxième canal de données est mis à disposition par une deuxième interface du support de données portable.

3. Procédé selon une des revendications de 1 à 2, cependant que les données clés sont transférées par l'intermédiaire du deuxième canal de données à une deuxième fonctionnalité du premier appareil externe qui n'est pas une partie de l'application exécutée.

4. Procédé selon la revendication 1 ou 2, cependant que la deuxième connexion de données est établie avec le deuxième appareil (3) externe.

5. Procédé selon une des revendications de 1 à 4, **caractérisé en ce que** la deuxième partie de l'application est réalisée avec les données clés mises à disposition par la première partie de l'application.

6. Procédé selon une des revendications précédentes, **caractérisé en ce que** le déblocage est déclenché par actionnement d'un dispositif d'entrée (7) du premier appareil (2) externe ou d'un dispositif d'entrée (10) du deuxième appareil (3) externe.

7. Procédé selon une des revendications précédentes, **caractérisé en ce que**, par le premier appareil (2) externe par l'intermédiaire de la première interface (5) du support de données (1) portable, ou par le deuxième appareil (3) externe par l'intermédiaire de la deuxième interface (6) du support de données (1) portable, une information de déblocage est transmise au support de données (1) portable.

8. Procédé selon la revendication 7, **caractérisé en ce que** l'information de déblocage est accordée de telle façon aux données clés que le déblocage de la deuxième partie de l'application ne prend effet que si la deuxième partie de l'application est exécutée sur la base des données clés.

9. Procédé selon une des revendications 7 ou 8, **caractérisé en ce que** l'information de déblocage est liée aux données clés par une relation cryptographique.

10. Procédé selon une des revendications précédentes, **caractérisé en ce que** les données clés représentent des données caractérisant une transaction.

11. Procédé selon la revendication 10, **caractérisé en ce que**, dans le cadre de la première partie de l'application, les données caractérisant la transaction sont transmises du premier appareil (2) externe au support de données (1) portable.

12. Procédé selon une des revendications 10 ou 11, **caractérisé en ce que**, dans le cadre de la deuxième partie de l'application, les données caractérisant la transaction sont transmises par le support de données (1) portable par l'intermédiaire d'un réseau (11), en particulier par Internet, à un serveur (4).

13. Support de données portable, en particulier sous forme d'une carte à puce, d'un module de sécurité, d'une carte mémoire de masse sécurisée ou d'un jeton, conçu pour l'exécution d'un procédé selon une des revendications précédentes.
